# FASCICULE DE BREVET EUROPEEN

(11) **EP 0 722 847 B1**
(45) Date de publication et mention de la délivrance du brevet: **24.03.1999**
(21) Numéro de dépôt: 96400159.8
(22) Date de dépôt: 23.01.1996
(51) Int. Cl.: B60B 33/00

(54) **Roulette pivotante perfectionnée**
Verbesserte Lenkrolle
Improved castor wheel

(30) Priorité: 23.01.1995 FR 9500700
(43) Date de publication de la demande: 24.07.1996
(73) Titulaire: GUITEL-ETIENNE MOBILOR, F-93310 Le Pré Saint-Gervais (FR)
(72) Inventeur: Huart, Gilbert, F-378340 Voreppe (FR); Roy, Jean-Pierre, F-93700 Drancy (FR)
(74) Mandataire: Le Bras, Hervé

(56) Documents cités:
- EP-A- 0 492 151
- DE-A- 3 837 824
- DE-U- 9 016 565
- GB-A- 1 603 178
- US-A- 4 013 808
- US-A- 5 002 163

## Description

La présente invention concerne une roulette pivotante comportant une roue montée à rotation, par l'intermédiaire d'un roulement intérieur, sur un essieu solidaire d'une chape, ladite chape étant elle-même montée à rotation, par l'intermédiaire d'un palier de support, sur l'extrémité inférieure d'un axe de pivotement vertical perpendiculaire à l'axe de rotation de la roue et décalé par rapport à ce dernier, ladite roue comportant un corps de roue entourant le roulement intérieur et un bandage de roulement entourant le corps de roue, le roulement intérieur comportant une bague extérieure, une bague intérieure et des organes de roulement interposés entre la bague extérieure et la bague intérieure, et le corps de roue comportant un moyeu qui s'étend axialement de part et d'autre de la bague extérieure, une jante supportant le bandage de roulement et un voile reliant le moyeu à la jante.

De telles roulettes sont connus notamment par DE-A-38 37 824 et EP-A-0 492 151. Ces documents ne fournissent aucune information sur la manière de réaliser le corps de roue et sur la manière de monter le bandage de roulement sur le corps de roue. D'autre part, selon les enseignements de ces documents, la roue est montée sur l'essieu au moyen de deux manchons formant entretoises et des pare-fils sont fixés sur les faces extérieures de la chape.

Le but de la présente invention est de proposer une roulette de type mentionné ci-dessus qui soit facile à monter, qui soit peu bruyante et d'un coût de fabrication faible.

L'invention atteint son but par le fait que le corps de roue est réalisé en un matériau plastique injecté entre ladite bague extérieure et ledit bandage de roulement de telle manière que le roulement intérieur et le bandage de roulement soient prisonniers dudit corps de roue et par le fait que la roue est montée sur l'essieu au moyen de deux pare-fils annulaires en forme de cloches ajustées dans le corps de roue, lesdits pare-fils étant disposés de part et d'autre du moyeu et comportant chacun un manchon faisant office d'entretoise dont la portion d'extrémité est interposée entre la bague intérieure et l'essieu et dont l'autre portion comporte des surfaces de butée en appui sur la face frontale adjacente de ladite bague intérieure. Le voile de roue comporte au moins un jonc annulaire sur chacune de ses faces latérales, et les bords périphériques des pare-fils sont disposés au voisinage immédiat du voile de roue et desdits joncs.

Les joncs et les moyeux forment ainsi des chicanes avec la paroi des pare-fils, qui évitent l'intrusion de salissures dans le roulement intérieur.

La présente invention concerne également un procédé pour réaliser une roue, notamment pour roulette pivotante, ladite roue comportant un roulement intérieur, un corps de roue entourant le roulement intérieur et un bandage de roulement entourant le corps de roue, ledit roulement comprenant une bague extérieure, une bague intérieure et des organes de roulement interposés entre la bague extérieure et la bague intérieure.

Selon l'invention ce procédé est caractérisé par le fait que l'on réalise le corps de roue par injection d'une matière plastique entre la bague extérieure et le bandage dans un moule approprié dans lequel le roulement intérieur et le bandage ont été préalablement insérés, ledit moule étant conformé de telle manière que la bague extérieure et le bandage soient prisonniers dudit corps de roue.

D'autres avantages et caractéristiques de l'invention ressortiront à la lecture de la description suivante faite à titre d'exemple non limitatif et en référence aux dessins annexés dans lesquels :

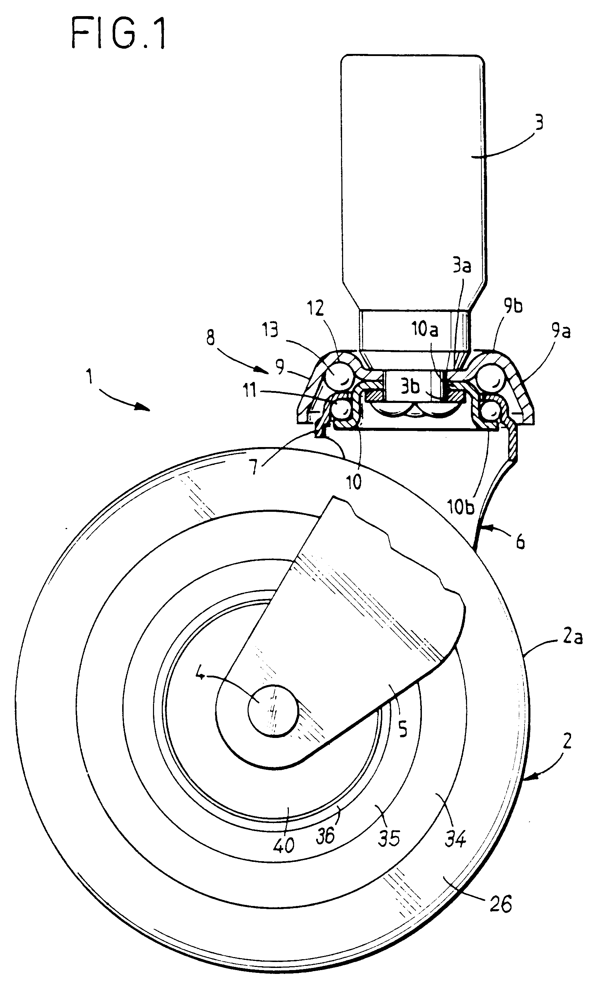

la figure 1 est une vue en élévation et en coupe verticale partielle d'une roulette pivotante ;
la figure 2 est une coupe, selon un plan passant par l'axe de rotation, de la roue de la roulette de la figure 1 ;
la figure 3 montre en coupe le moule en deux morceaux destiné à réaliser la roue selon le procédé de l'invention ;
les figures 4 et 5 montrent la disposition du bandage et du roulement intérieur dans le moule.

La roulette 1 représentée sur les dessins comporte une roue 2 qui est susceptible de pouvoir pivoter autour d'un axe vertical de pivotement 3 sensiblement orthogonal à l'axe de rotation horizontal 4 de la roue 2. Les extrémités de l'axe de rotation 4 sont portées par au moins une joue latérale, et de préférence deux joues latérales 5, d'une chape 6 dont la partie supérieure se présente sous la forme d'une jupe 7 montée par l'intermédiaire d'un palier de support 8 sur l'extrémité inférieure de l'axe vertical de pivotement 3.

Dans le présent descriptif, par axe de pivotement il faut entendre toute tige ou platine destinée à fixer la roulette 1 sur un chariot ou autre plate-forme mobile non représenté sur le dessin.

Comme on peut le voir sur les dessins, le palier de support 8 comprend une première cuvette annulaire 9 et une deuxième cuvette annulaire 10 fixée comme la première, rigidement sur l'extrémité inférieure de l'axe de pivotement 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui, dans la zone d'ouverture intérieure repose sur le fond annulaire 10a de la cuvette inférieure 10. Les deux cuvettes 9, 10 sont fixées sur l'axe de pivotement 3 et sont enserrées par leurs bords intérieurs entre deux épaulements annulaires 3a, 3b de l'axe vertical 3. A son extrémité inférieure, cette cuvette inférieure 10 possède un rebord annulaire 10b qui, par sa face supérieure, sert de piste de roulement à une première série de billes de roulement ou organes analogues 11 sur laquelle prend appui la jupe 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la jupe 7. La cuvette supérieure 9 entoure et recouvre la jupe 7 et la cuvette inférieure 10.

Les cuvettes 9 et 10 ainsi que la chape 6 sont réalisées en tôle et reçoivent un traitement thermochimique, tel que celui décrit dans le document EP-A-0 077 627, qui permet d'augmenter très sensiblement leur résistance et leur tenue à l'usure.

La roue 2 est montée sur l'essieu 20 reliant les joues 5 et formant l'axe de rotation 4, au moyen d'un roulement intérieur 21 qui comporte une bague extérieure 22 et une bague intérieure 23, et des organes de roulement 24 interposés entre la bague extérieure 22 et la bague intérieure 23.

La roue 2 comporte un corps de roue 25 entourant le roulement intérieur 21 et un bandage de roulement 26 entourant le corps de roue 25.

Le roulement intérieur 21 est du type roulement de précision et est réalisé en acier.

Selon l'invention le corps de roue 25 est réalisé en une matière plastique par injection dans un moule 30 en deux parties séparables 30a et 30b selon un plan de joint 31 correspondant au plan de symétrie de la roue 2. Les deux parties sont susceptibles d'être appliquées l'une contre l'autre suivant le plan de joint 31. Dans cette position fermée, le moule 30 délimite une cavité interne annulaire 32 dont le profil correspond au profil de la roue 2, bandage de roulement 26 et roulement intérieur 21 compris. Ce profil est prévu de telle manière que le corps de roue 25 présente un moyeu 33 qui s'étend axialement de part et d'autre de la bague extérieure 22 du roulement 21, une jante 34 sur laquelle est monté le bandage 26, et un voile 35 reliant le moyeu 33 et la jante 34, ledit voile 35 comportant sur chacune de ses faces latérales un jonc annulaire 36 dont l'utilité sera expliquée plus loin dans le présent mémoire.

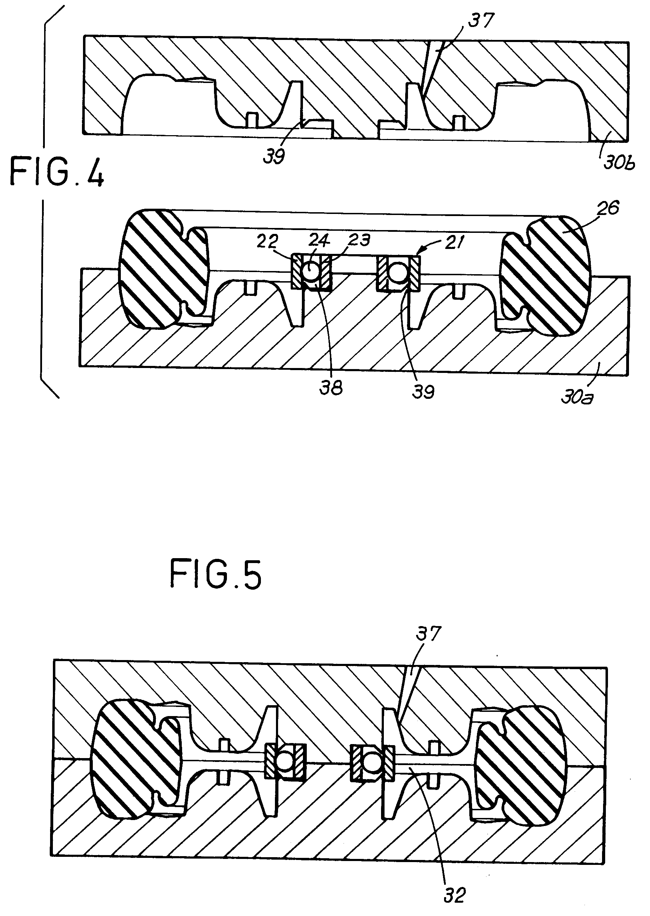

Comme on le voit sur la figure 4, on dispose dans l'empreinte de la partie 30a du moule 30, en position ouverte, le bandage de roulement 26 et le roulement intérieur 21. On applique ensuite (voir figure 5) les deux parties de moule 30a et 30b l'une contre l'autre et on injecte de la matière plastique dans l'espace libre de la cavité 32 par des canaux d'injection 37. Afin d'éviter que de la matière plastique pénètre dans l'espace 38 délimité par la bague extérieure 22 et la bague intérieure 23 du roulement 21, les parties du moule 30a et 30b comportent des épaulements 39 formant joint d'étanchéité entre la cavité interne 32 et cet espace 38. Le bandage 26 comporte sur sa face interne des reliefs 39a qui permettent l'accrochage avec le corps de roue 25. Ce type d'accrochage évite l'emploi d'un adhérisant pour maintenir le bandage sur le corps en utilisation dans le cas de bandage réalisé à base de caoutchouc naturel.

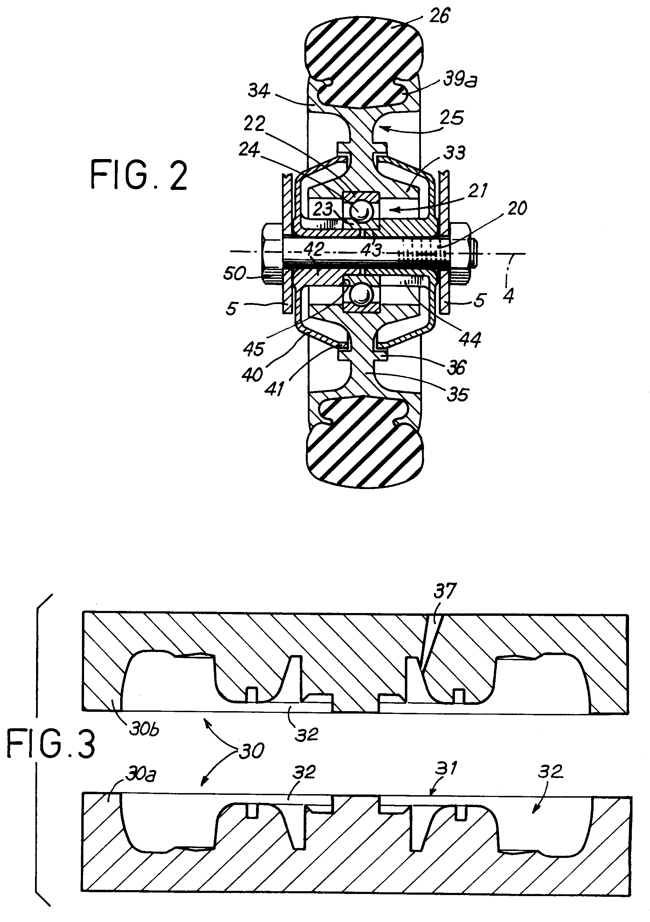

Comme on le voit clairement sur la figure 2, le roulement intérieur 21 est protégé contre l'introduction de salissures par deux pare-fils 40 disposés de part et d'autre du moyeu 33. Chaque pare-fil 40 se présente sous la forme d'une cloche dans la cavité de laquelle loge le moyeu 33 et dont le bord périphérique 41 se trouve au voisinage immédiat du voile de roue 35 et d'un jonc annulaire 36. De préférence, le jonc annulaire 36 entoure le bord périphérique 41. Chaque pare-fil 40 comporte un manchon 42 formant entretoise et entourant l'essieu 20. La portion d'extrémité interne 43 du manchon 42 est interposée entre la bague intérieure 23 du roulement 21 et l'essieu 20. L'autre portion de manchon présente des ailettes axiales 44 dont les faces d'extrémité 45 sont en appui sur une face frontale de la bague intérieure 23. La référence 50 représente un écrou de serrage coopérant avec un filetage de l'essieu 20 et destiné à serrer les joues 5 de la chape 6 contre les pare-fils 40 afin d'immobiliser la bague intérieure 23 par rapport à l'essieu 20. L'essieu 20 peut également être un rivet fixé sur la chape 6.

## Revendications

1. Roulette pivotante comportant une roue (2) montée à rotation, par l'intermédiaire d'un roulement intérieur (21), sur un essieu (20) solidaire d'une chape (6), ladite chape (6) étant elle-même montée à rotation, par l'intermédiaire d'un palier de support (8), sur l'extrémité inférieure d'un axe de pivotement (3) vertical perpendiculaire à l'axe de rotation (4) de la roue (2) et décalé par rapport à ce dernier, ladite roue (2) comportant un corps de roue (25) entourant le roulement intérieur (21) et un bandage de roulement (26) entourant le corps de roue (25), le roulement intérieur (21) comportant une bague extérieure (22), une bague intérieure (23) et des organes de roulement (24) interposés entre ladite bague extérieure (22) et ladite bague intérieure (23), le corps de roue (25) comportant un moyeu (33) qui s'étend axialement de part et d'autre de la bague extérieure (22), une jante (34) supportant le bandage de roulement (26) et un voile de roue (35) reliant la jante (34) au moyeu (33) caractérisé par le fait que le corps de roue (25) est réalisé en un matériau plastique injecté entre ladite bague extérieure (22) et ledit bandage de roulement (26) de telle manière que la bague extérieure (22) et le bandage de roulement (26) soient prisonniers dudit corps de roue (25), et par le fait que la roue (2) est montée sur l'essieu (20) au moyen de deux pare-fils annulaires (40) en forme de cloches ajustées dans le corps de roue (25), lesdits pare-fils (40) étant disposés de part et d'autre du moyeu (33) et comportant chacun un manchon (42) faisant office d'entretoise dont la portion d'extrémité interne (43) est interposée entre la bague intérieure (23) et l'essieu (20) et dont l'autre portion comporte des surfaces de butée (45) en appui sur la face frontale adjacente de ladite bague intérieure (23).

2. Roulette selon la revendication 1, caractérisée par le fait que les surfaces de butée (45) sont constituées par les faces d'extrémité d'ailettes axiales (44) formées à la périphérie de l'autre portion du manchon (42).

3. Roulette selon l'une des revendications 1 ou 2, caractérisée par le fait que le voile de roue (35) comporte au moins un jonc annulaire (36) sur chacune de ses faces latérales, et par le fait que les bords périphériques (41) des pare-fils (40) sont disposés au voisinage immédiat du voile de roue (35) et desdits joncs (36).

4. Roulette selon l'une des revendications 1 à 3, caractérisée par le fait que le bandage (26) comporte des reliefs (39a) pour l'accrochage sur le corps de roue (25).

5. Procédé pour réaliser une roue, notamment pour roulette pivotante, ladite roue (2) comportant un roulement intérieur (21), un corps de roue (25) entourant le roulement intérieur (21) et un bandage de roulement (26) entourant le corps de roue (25), ledit roulement (21) comprenant une bague extérieure (22), un bague intérieure (23) et des organes de roulement (24) interposés entre la bague extérieure (22) et la bague intérieure (23), caractérisé par le fait que l'on réalise ledit corps de roue (25) par injection d'une matière plastique entre ladite bague extérieure (22) et ledit bandage (26) dans un moule approprié (30) dans lequel ledit roulement intérieur (21) et le bandage ont été préalablement insérés, ledit moule (30) étant conformé de telle manière que la bague extérieure (22) soit prisonnière dudit corps de roue (25).

## Claims

1. Pivoting castor comprising a wheel (2) rotatably mounted, via an internal bearing (21), on an axle (20) fixed to a fork joint (6), said fork joint (6) itself being rotatably mounted, via a support bearing (8), on the lower end of a vertical pivotal axis (3) perpendicular to the axis of rotation (4) of the wheel (2) and offset in relation to the latter, said wheel (2) comprising a wheel body (25) surrounding the internal bearing (21) and a running tyre (26) surrounding the wheel body (25), the internal bearing (21) comprising an outer ring (22), an inner ring (23) and bearing members (24) placed between said outer ring (22) and said inner ring (23), the wheel body (25) comprising a hub (33) that extends axially from one side to the other of the outer ring (22), a rim (34) supporting the running tyre (26) and a wheel centre (35) connecting the rim (34) to the hub (33) characterised by the fact that the wheel body (25) is made of a plastic material injected between said outer ring (22) and said running tyre (26) in such a way that the outer ring (22) and the running tyre (26) are captured in said wheel body (25), and by the fact that the wheel (2) is mounted on the axle (20) by means of two bell-shaped annular thread-guards (40) fitted into the wheel body (25), said thread-guards (40) being arranged on either side of a hub (33) and each comprising a sleeve (42) serving as a brace, the inner end portion (43) of which is placed between the inner ring (23) and the axle (20) and the other portion of which comprises stop surfaces (45) bearing against the adjacent front face of said inner ring (23).

2. Castor according to Claim 1, characterised by the fact that the stop surfaces (45) are constituted by the end faces of axial ribs (44) formed on the periphery of the other portion of the sleeve (42).

3. Castor according to one of Claims 1 or 2, characterised by the fact that the wheel centre (35) comprises at least one annular retaining ring (36) on each of its lateral faces, and by the fact that the peripheral edges (41) of the thread-guards (40) are arranged in the immediate vicinity of the wheel centre (35) and of said retaining rings (36).

4. Castor according to one of Claims 1 to 3, characterised by the fact that the tyre (26) comprises reliefs (39a) for coupling to the wheel body (25).

5. Method for producing a wheel, particularly for a pivoting caster, said wheel (2) comprising an internal bearing (21), a wheel body (25) surrounding the internal bearing (21) and a running tyre (26) surrounding the wheel body (25), said bearing (21) comprising an outer ring (22), an inner ring (23) and bearing members (24) placed between the outer ring (22) and the inner ring (23), characterised by the fact that the wheel body (25) is made by injecting a plastic material between said outer ring (22) and said tyre (26) in an appropriate mould (30) into which said internal bearing (21) and the tyre have been inserted beforehand, said mould (30) being shaped in such a way that the outer ring (22) is captured in said wheel body (25).

## Patentansprüche

1. Lenkrolle mit einem Rad (2), das durch ein inneres Wälzlager (21) auf einer Achse (20) drehbar gelagert ist, die an einem Gabelstück (6) befestigt ist, das seinerseits durch ein Stützlager (8) am unteren Ende einer senkrechten, zur Drehachse (4) des Rades (2) rechtwinkligen und bezogen auf diese versetzten Schwenkachse (3) drehbar gelagert ist, wobei das Rad (2) einen das innere Wälzlager (21) umgebenden Radkörper (25) und einen den Radkörper (25) umgebenden Radreifen (26) hat, das innere Walzlager (21) einen Außenring (22), einen Innenring (23) und zwischen diesen angeordnete Wälzkörper (24) hat, der Radkörper (25) eine Nabe (33) hat, die sich axial auf beiden Seiten des Außenrings (22) erstreckt, eine Felge (34) den Radreifen (26) stützt und eine Radscheibe (35) die Felge (34) mit der Nabe (33) verbindet,
dadurch gekennzeichnet, daß der Radkörper (25) aus einem Kunststoff gebildet ist, der zwischen dem Außenring (22) und dem Radreifen (26) so eingespritzt ist, daß der Außenring (22) und der Radreifen (26) durch den Radkörper (25) eingefaßt sind, und dadurch, daß das Rad (2) durch zwei ringförmige Schutzhauben (40) mit in den Radkörper (25) eingepaßter Glockenform auf der Achse (20) gelagert ist, die Schutzhauben (40) auf je einer Seite der Nabe (33) angeordnet sind und je eine als Distanzrohr dienende Muffe (42) haben, deren innerer Endteil (43) zwischen dem Innenring (23) und der Achse (20) angeordnet ist und deren anderer Teil Anlageflächen (45) hat, die an der angrenzenden Stirnfläche des Innenrings (23) anliegen.

2. Rolle nach Anspruch 1,
dadurch gekennzeichnet, daß die Anlageflächen (45) durch die Endflächen axialer Rippen (44) gebildet sind, die am Umfang des anderen Teils der Muffe (42) ausgebildet sind.

3. Rolle nach einem der Ansprüche 1 oder 2,
dadurch gekennzeichnet, daß die Radscheibe (35) auf jeder ihrer Seitenflächen mindestens eine ringförmige Leiste (36) hat und die Umfangsränder (41) der Schutzhauben (40) in unmittelbarer Nähe der Radscheibe (35) und dieser Leisten (36) angeordnet sind.

4. Rolle nach einem der Ansprüche 1 bis 3,
dadurch gekennzeichnet, daß der Radreifen (26) Erhöhungen (39a) zum Verhaken auf dem Radkörper (25) hat.

5. Verfahren zum Herstellen eines Rades, insbesondere für eine Lenkrolle, wobei das Rad (2) ein inneres Wälzlager (21), einen das innere Wälzlager (21) umgebenden Radkörper (25) und einen den Radkörper (25) umgebenden Radreifen (26) hat, und das Wälzlager (21) einen Außenring (22), einen Innenring (23) und zwischen diesen angeordnete Wälzkörper (24) hat,
dadurch gekennzeichnet, daß man den Radkörper (25) durch Einspritzen eines Kunststoffes zwischen dem Außenring (22) und dem Radreifen (26) in eine geeignete Form (30) herstellt, in die das innere Wälzlager (21) und der Radreifen eingelegt worden sind, wobei die Form (30) so angepaßt ist, daß der Außenring (22) vom Radkörper (25) eingefaßt ist.
